# EUROPEAN PATENT SPECIFICATION

(11) **EP 2 273 585 B1**
(45) Date of publication and mention of the grant of the patent: **25.11.2015**
(21) Application number: 10251225.8
(22) Date of filing: 08.07.2010
(51) Int. Cl.: H01M 2/20, H01M 2/22, H01M 2/34, H01M 6/50, H01M 10/42

(54) **Battery pack**
Batteriepack
Bloc-batteries

(30) Priority: 08.07.2009 US 223862 P; 19.05.2010 US 783513
(43) Date of publication of application: 12.01.2011
(73) Proprietor: Samsung SDI Co., Ltd., Gyeonggi-do (KR)
(72) Inventor: Park, Kyung-Ho, Yongin-si Gyeonggi-do (KR)
(74) Representative: Mounteney, Simon James

(56) References cited:
- JP-A- 2002 100 331
- US-A1- 2003 211 385
- US-A1- 2005 287 431
- US-A1- 2009 087 734
- US-A1- 2009 104 513
- US-A1- 2009 111 018

## Description

### Background of the Invention

### 1. Field of the Invention

Embodiments relate to a battery pack of a chargeable and dischargeable secondary battery.

### 2. Description of the Related Art

In general, a battery pack of a chargeable and dischargeable secondary battery includes a bare cell having a case in which an electrode assembly is accommodated and a protective circuit module (PCM) connecting the bare cell to an external terminal to control charge and discharge of the bare cell.

In such a battery pack, a lamination type electrode assembly obtained by laminating a positive electrode plate, a negative electrode plate, and a separator interposed between the positive electrode plate and the negative electrode plate can be used as the electrode assembly of the bare cell. Alternatively, a wind type electrode assembly wound in a state where the positive electrode plate, the negative electrode plate, and the separator interposed between the positive electrode plate and the negative electrode plate are laminated can be used as the electrode assembly of the bare cell. The electrode assembly of such a battery pack can be accommodated in a cylindrical or polygonal can or a pouch type armoring material to form the bare cell. The bare cell is electrically connected to the PCM.

In existing battery packs, a supporting member can be installed to electrically connect the bare cell to the PCM and to mechanically support the PCM installed in the bare cell. A supporting holder is installed as the supporting member. Molding resin is injected into and filled in a gap formed between the bare cell and the protective circuit module in a hot melting process to form the supporting member. The protective circuit module is supported by the molding resin.

When a supporting holder is used as the supporting member, since a separate structure is provided, the fabrication costs increase. In other words, using a supporting holder in this way increases fabrication costs.

When the molding resin as the supporting member is injected in a hot melting process, due to an inferior formation of the molding resin, the protective circuit module can be inclined in the vertical direction or twisted laterally. When the protective circuit module is vertically inclined in this way, it can cause the external terminal of the protective circuit module to not be connected to an external device. When the protective circuit module is twisted laterally, the external terminal of the protective circuit module can deviate from an initial position so that assembly is not completed.

US2009104513 discloses a conductive tab that includes a battery connecting part contacting a plurality of secondary batteries, a wire connecting part extended from the battery connecting part and connected to a wire, and at least one bending part formed in the battery connecting part. The bending part is coupled to the secondary battery to guide the positions of the secondary batteries.

US 2009/0087734 discloses a secondary battery having positive and negative terminals formed on the top face of a unit cell and positive and negative terminals formed on a surface of a circuit board opposed to the unit cell. These are electrically connected to each other by connectors which include an elastic body and a conductor.

JP 2002-100331 discloses a battery pack having a plurality of cylindrical secondary batteries and a circuit board formed in a space between curved faces of adjacent cylindrical batteries.

US 2009/111018 discloses a battery pack including a rechargeable battery having at least one rounded lateral side and a cover frame including a frame surrounding each of the lateral sides of the battery.

### Brief Summary of the Invention

The present invention provides a battery pack of a chargeable and dischargeable secondary battery. The invention is defined in claim 1.

In accordance with an aspect of the present invention, lead plates which electrically connect a protective circuit module to a bare cell, support the protective circuit module. Surfaces of the lead plates contacting the bare cell have the same shape as that of one side of the bare cell. When one side of the bare cell has a curvature, the lead plates have curvature pieces to be seated on the side of the bare cell. Therefore, the lead plates are closely attached to the bare cell with a large area than the bare cell so that the protective circuit module is supported more stably.

In accordance with another aspect of the present invention, the lead plates electrically connecting the protective circuit module to the bare cell support the protective circuit module. The lead plates can have the same height as that of the protective circuit element provided in the protective circuit module. The protective circuit element may be mounted in the center of one side of the protective circuit module facing the bare cell to support the protective circuit module. Therefore, both sides of the protective circuit module are supported by the lead plates and the center of the protective circuit module is supported by the protective circuit element.

The curved portions of the first and second lead plates enable the first and second lead plates to stably support the protective circuit module on the curved surface of the bare cell.

The curved portions of the first and second lead plates can conform to the shape of the curved surface of the bare cell. In some embodiments, all the portions of the first and second lead plates can conform to the shape of the adjacent portions of the bare cell.

Preferred features of this aspect are set out in claims 2 to 15.

### Brief Description of the Drawings

The objects, features and advantages of the present invention will be more apparent from the following detailed description in conjunction with the accompanying drawings, in which:
FIG. 1 is an exploded perspective view illustrating a battery pack according to an embodiment of the present invention;
FIG. 2 is an exploded perspective view illustrating a bare cell and a protective circuit board in the battery pack according to the embodiment of the present invention;
FIG. 3 is a view illustrating the bare cell coupled with the protective circuit board in the battery pack according to the embodiment of the present invention;
FIG. 4 is a front view of the battery pack of FIG. 3;
FIG. 5 is a plan view of the battery pack of FIG. 4;
FIG. 6 is a left side sectional view of the battery pack of FIG. 4; and
FIG. 7 is a right side sectional view of the battery pack of FIG. 4.

### Detailed Description of the Invention

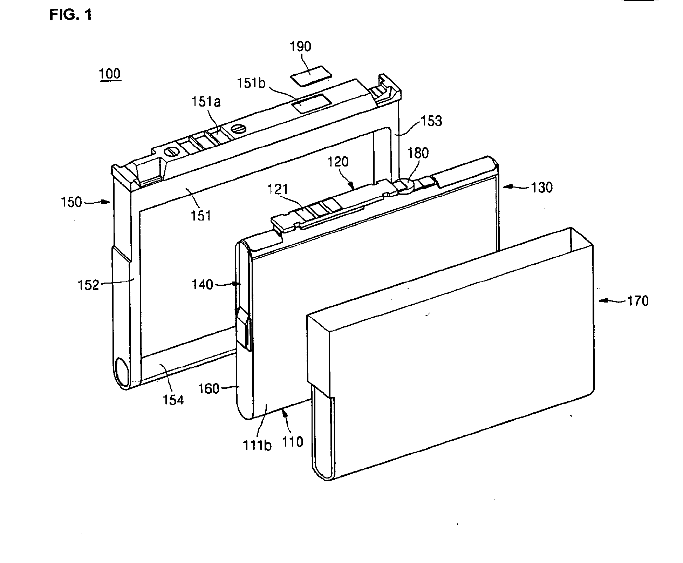

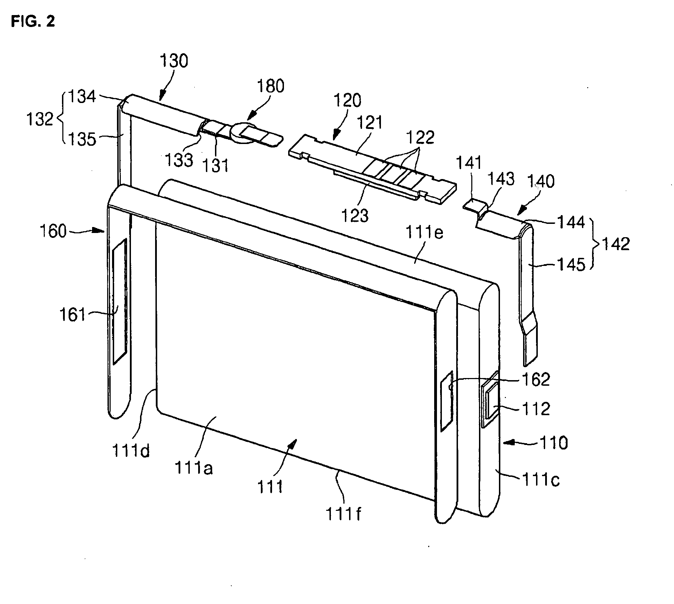

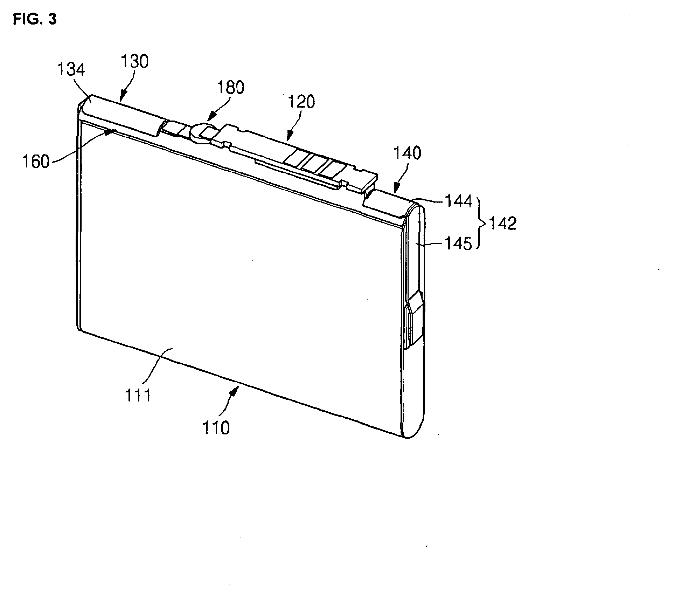

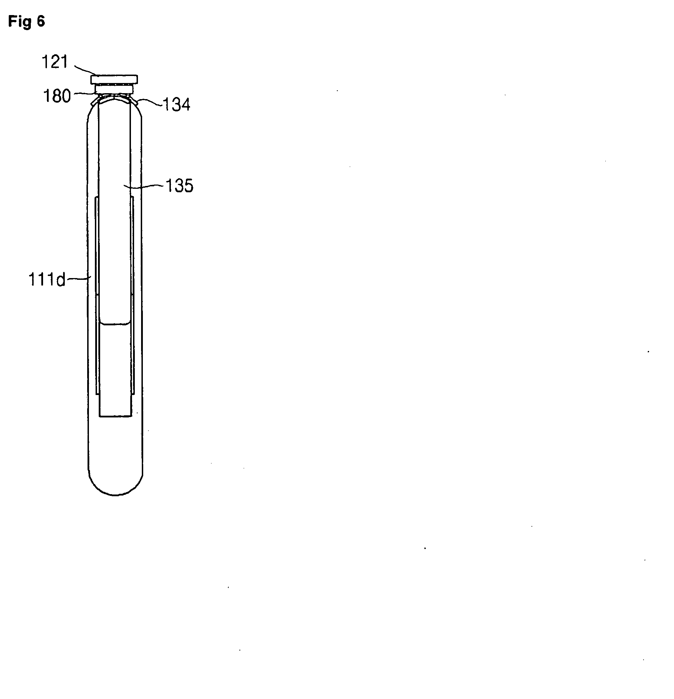

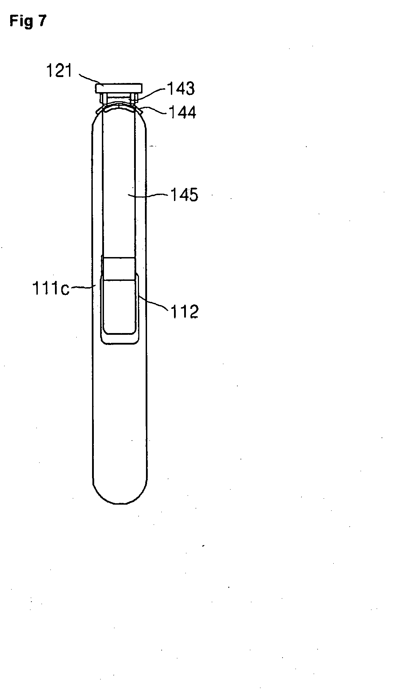

As illustrated in FIGS. 1 to 7, a battery pack 100 according to an embodiment of the present invention includes a bare cell 110, and a protective circuit module 120 electrically connected to the bare cell 110. The protective circuit module 120 can control the charge and discharge of the bare cell 110. Also provided are a first lead plate 130 and a second lead plate 140. The first and second lead plates 130, 140 act to support the protective circuit module 120 and to electrically connect the bare cell 110 to the protective circuit module 120. A cover 150 surrounding the bare cell 110 and the protective circuit module 120 is also provided.

In this embodiment, the surfaces of the first and second lead plates 130 and 140 which are seated on the bare cell 110 have the same shape as those of the surfaces that contact the bare cell 110. In other words, in this embodiment, the surfaces of the first and second lead plates 130 and 140 that contact the bare cell 110 conform to the shape of the bare cell 110.

The battery pack 100 according to this embodiment of the present invention further includes an insulation member 160 disposed between the first lead plate 130 and the second lead plate 140 to insulate them from each other, and a label 170 for fixing the bare cell 110 and the cover 150.

The bare cell 110 is produced by accommodating an electrode assembly (not shown) in a can 111 made of a metal. The can 111 may be made of aluminum or an alloy of aluminum, but embodiments of the invention are not limited thereto. The can 111 may be made out of any suitable material.

In this embodiment, the can 111 is a polygonal can having an approximately rectangular parallelepiped. In other embodiments, the can could have other appropriate shapes.

The can 111 includes first and second rectangular surfaces 111a and 111b that are wide rectangular surfaces. Third, fourth, fifth, and sixth surfaces 111c, 111d, 111e, and 111f integrated with the first and second surfaces 111a and 111b are narrow rectangular surfaces. The third and fourth surfaces 111c and 111d are short in length. The fifth and sixth surfaces 111e and 111f are longer than the third and fourth surfaces 111c and 111d. In other words, in this embodiment, first and second rectangular surfaces 111a and 111b are the major surfaces of the rectangular parallelepiped shaped can 111. The third and fourth surfaces 111c and 111d can be considered to be end surfaces. In this embodiment, the fifth and sixth surfaces 111e and 111f are curved, as will be discussed below. In other embodiments, only one of the fifth and sixth surfaces 111e and 111f may be curved.

The electrode assembly includes a positive electrode plate (not shown), a negative electrode plate (not shown), and a separator (not shown) interposed between the positive electrode plate and the negative electrode plate, which is the structure of a common electrode assembly. The positive electrode plate is electrically connected to the can 111, and the negative electrode plate is electrically connected to an electrode terminal 112 that protrudes from the third surface 111c of the bare cell 110.

The protective circuit module 120 includes a protective circuit board 121. External terminals 122 are mounted on one surface of the protective circuit board 121 (the surface facing away from the bare cell 110 in this embodiment). The protective circuit board 121 includes a protective circuit element 123 provided on the other surface of the protective circuit board 121. Therefore, in this embodiment, the external terminals 122 and the protective circuit element 123 face in different directions. The protective circuit element 123 controls the charge and discharge of the bare cell 110. The protective circuit element 123 makes the charge state of the bare cell 110 uniform and prevents overcharge and overdischarge. The protective circuit board 121 includes a positive electrode connection terminal (not shown) and a negative electrode connection terminal (not shown) that are electrically connected to the positive electrode terminal and the negative electrode terminal of the bare cell 110, respectively.

The first lead plate 130 electrically connects the positive electrode terminal of the bare cell 110 to the positive electrode connection terminal of the protective circuit board 121. The second lead plate 140 electrically connects the negative electrode terminal of the bare cell 110 to the negative electrode connection terminal of the protective circuit board 121.

The first and second lead plates 130 and 140 may be made of any electric conductive material. The first and second lead plates 130 and 140 may be made of nickel or a nickel alloy. However, embodiments of the present invention need not be limited to the above.

The shape and structure of the first and second lead plates 130 and 140 in this embodiment will now be described.

The first lead plate 130 includes a board connection unit 131 formed on one end of the lead plate 130. The board connection unit 131 is connected to the positive electrode connection terminal of the protective circuit board 121 and to a bare cell connection unit 132. The bare cell connection unit 132 is connected to the fourth surface 111d of the can 111 that corresponds to the positive electrode terminal of the bare cell 110. The first lead plate 130 further includes connection unit 133 provided to connect the board connection unit 131 to the bare cell connection unit 132.

In this embodiment, the board connection unit 131 is arranged to be parallel with the protective circuit board 121 and is electrically connected to the positive electrode connection terminal of the protective circuit board 121 by welding or the like.

The bare cell connection unit 132 has the shape matching the shape of the fifth surface 111e of the bare cell 110 including the can 111. The fifth surface 111e of the can 111 has a rounded shape with a curvature in this embodiment. In this embodiment, the bare cell connection unit 132 includes a curvature piece 134 having the same or a similar curvature as that of the curvature of the adjacent portion of the fifth surface 111e. In this embodiment, the bare cell connection unit 132 further includes a connector 135 arranged (e.g. bent) at a right angle from the curvature piece 134 to be connected to the fourth surface 111d of the can 111. The curvature piece 134 may have a larger width than that of the connector 135 so that the area that supports the protective circuit board 121 increases. In this embodiment, the connector 135 is connected to the fourth surface 111d of the can 111 through a first through hole 161 of the insulation member 160.

The connection unit 133 is provided at the end of the board connection unit 131 and is arranged perpendicular to one end of the curvature piece 134 that is one side of the bare cell connection unit 132 in order to connect the board connection unit 131 to the bare cell connection unit 132.

A secondary protective element may be provided between the first lead plate 130 and the protective circuit module 120. A positive temperature coefficient (PTC) element 180 or a safety element having equivalent performance is provided as the secondary protective element. According to this embodiment of the present invention, the PTC element 180 is used as the secondary protective element. However, a thermal fuse may be used as the secondary protective element. Although, in other embodiments, a secondary protective element may not be provided.

In this embodiment, the second lead plate 140 includes a board connection unit 141 provided at one end of the second lead plate 140. The board connection unit 141 is connected to the negative electrode connection terminal of the protective circuit board 121 and to a bare cell connection unit 142. The bare cell connection unit 142 is connected to the electrode terminal 112 of the third surface 111c of the can 111 corresponding to the negative electrode terminal of the bare cell 110. The second lead plate 140 further includes a connection unit 143 connecting the board connection unit 141 to the bare cell connection unit 142.

In this embodiment, the board connection unit 141 is arranged to be parallel with the protective circuit board 121 and is electrically connected to the negative electrode connection terminal of the protective circuit board 121 by welding or the like.

The bare cell connection unit 142 has the shape matching the shape of the fifth surface 111e of the bare cell 110 including the can 111. In this embodiment, the bare cell connection unit 142 includes a curvature piece 144 having the same or a similar curvature as that of the adjacent portion of the fifth surface 111e of the can 111, and a connector 145. The connector 145 is arranged (e.g. bent) at a right angle from the curvature piece 144 to be connected to the electrode terminal 112 that protrudes from the third surface 111c of the can 111. In some embodiments, the curvature piece 144 may have a larger width than the connection unit 145. That is, the curvature piece 144 may have a relatively large contact area with the fifth surface 111e so that the area of the curvature piece 144 that supports the protective circuit board 121 increases. In this embodiment, the connector 145 is connected to the electrode terminal 112 of the third surface 111c of the can 111 through a second through hole 162 of the insulation member 160. That is, although the width of the connector 145 is smaller than the width of the curvature piece 144 in this embodiment, other embodiments could use other widths. For example, the connector 145 could have any width that enables the connector 145 to be electrically connected to the electrode terminal 112 of the third surface 111c by welding or the like.

Both ends of the connection unit 143 are perpendicular to the board connection unit 141 and the bare cell connection unit 142 in this embodiment.

When installed, the cover 150 surrounds the bare cell 110, the protective circuit module 120, and the first and second lead plates 130 and 140. The cover 150 includes four frames 151, 152, 153, and 154 integrated with each other.

The first frame 151 corresponds to the fifth surface 111e of the bare cell 110. The first frame 151 surrounds the protective circuit module 120. The first frame 151 has a plurality of terminal holes 151 a, through which the external terminals 122 of the protective circuit module 120 protrude. The first frame 151 has a water-sensitive label attaching groove 151 b, to which a water-sensitive label 190 can be attached.

The second frame 152 is formed at one end of the first frame 151 and is integrated with the first frame 151. The third frame 153 is formed at the other end of the first frame 151 and is integrated with the first frame 151. The second frame 152 corresponds to the third surface 111c of the can 111 (i.e. one of the end surfaces in this embodiment) and the third frame 153 corresponds to the fourth surface 111d of the can 111 (i.e. the other end surfaces in this embodiment) so that the third and fourth surfaces 111c and 111d of the can 111 are protected.

Both ends of the fourth frame 154 are integrated with the ends of the second frame 152 and the third frame 153. Therefore, the fourth frame 154 corresponds to the fourth surface 111d of the can 111 so as to protect the fourth surface 111d of the can 111.

The insulation member 160 is attached to the third surface 111c, the fourth surface 111d, and the fifth surface 111e of the can 111. The insulation member 160 insulates the protective circuit element 123 of the protective circuit module 120 mounted on the fourth surface 111d from the can 111 of the bare cell 110. The insulation member 160 insulates the first lead plate 130 mounted on the fourth surface 111d and the second lead plate 140 mounted on the third surface 111c from the can 111 of the bare cell 110.

The insulation member 160 has a first through hole 161 formed on one side (corresponding to the fourth surface 111d in this embodiment) and a second through hole 162 formed in the other side (corresponding to the third surface 111c in this embodiment). The connector 135 of the first lead plate 130 is connected to the fourth surface 111d corresponding to the positive electrode of the bare cell 110 through the first through hole 161. The connector 145 of the second lead plate 140 is connected to the electrode terminal 112 corresponding to the negative electrode of the bare cell 110 through the second through hole 162.

A tape made of an insulation material or any member having the same property, material, and shape as the tape may be used as the insulation member 160 in other embodiments. The insulation member 160 could also take other appropriate shapes.

The label 170 surrounds the sides and the bottom of the bare cell 110 after the bare cell 110 has been coupled with the cover 150.

Therefore, as described above, a portion of the first lead plate that is located adjacent a first portion of a curved surface of the bare cell is curved, and a portion of the second lead plate that is located adjacent a second portion of the curved surface of the bare cell is curved. In this embodiment, the portion of the first lead plate that is located adjacent the first portion of the curved surface of the bare cell is curved with substantially a same curvature as a curvature of the first portion of the curved surface, and the portion of the second lead plate that is located adjacent the second portion of the curved surface of the bare cell is curved with substantially a same curvature as a curvature of the second portion of the curved surface.

Although the curved surface 111e of the bare cell in this embodiment has a uniform curvature, it will be appreciated that the surface 111e of the bare cell in other embodiments may have a non-uniform curvature. In other words, a first portion of curved surface of the bare cell may be curved with a first curvature and a second portion of curved surface of the bare cell may be curved with a second curvature.

In such embodiments, the portion of the first lead plate that is located adjacent the first portion of the curved surface may have a different curvature to the portion of the second lead plate that is located adjacent the second portion of a curved surface.

Processes of assembling the battery pack 100 according to embodiments of the present invention having the above structure will be described.

In some embodiments, the first lead plate 130 and the second lead plate 140 are first assembled on the protective circuit board 121 of the protective circuit module 120. That is, the board connection unit 131 of the first lead plate 130 may be welded to the positive electrode connection terminal (not shown) of the protective circuit board 121. In this embodiment of the present invention, the PTC element 180 is mounted between the first lead plate 130 and the protective circuit board 121. Therefore, the board connection unit 131 of the first lead plate 130 is connected to one end of the PTC element 180. The other end of the PTC element 180 is connected to the positive electrode connection terminal of the protective circuit board 121.

The negative electrode connection terminal (not shown) of the protective circuit board 121 is welded to the board connection unit 141 of the second lead plate 140.

Then, the first and second lead plates 130 and 140 are electrically connected to the bare cell 110.

Before the first and second lead plates 130 and 140 are connected to the bare cell 110, the insulation member 160 is attached to the external surface of the bare cell 110. The insulation member 160 is attached to the third, fourth, and fifth surfaces 111c, 111d, and 111e of the can 111, to which the first and second lead plates 130 and 140 are attached.

The protective circuit module 120, to which the first and second lead plates 130 and 140 are connected, may be seated on the narrow and relatively long fifth or sixth surface 111e or 111f among the sides of the can 111 of the bare cell 110. In this embodiment of the present invention, the protective circuit module 120 is seated on the fifth surface 111e, which is curved.

The protective circuit module 120 is seated such that the first and second lead plates 130 and 140 are electrically connected to mechanically support the protective circuit module 120.

The curvature piece 134 of the bare cell connection unit 132 of the first lead plate 130 is seated on the fifth surface 111e. The connector 135 is then welded to the fourth surface 111d in this embodiment. Therefore, the first lead plate 130 is electrically connected to the positive electrode of the bare cell 110 by the connector 135. The first lead plate 130 mechanically supports the protective circuit board 121 as a result of the curvature piece 134. In particular, in this embodiment, the curvature piece 134 has approximately the same curvature as that of the fifth surface 111e so that it is closely attached to the fifth surface 111e. As a result of the curvature of the curvature piece 134, the first lead plate stably supports the protective circuit module 120. In this embodiment, the curvature piece 134 also has a large width, which also helps to support the protective circuit module 120.

The curvature piece 144 of the bare cell connection unit 142 of the second lead plate 140 is seated on the fifth surface 111e. In this embodiment, the connector 145 is then welded to the electrode terminal 112 as a negative electrode terminal that protrudes from the third surface 111e. Therefore, the second lead plate 140 is electrically connected to the negative electrode of the bare cell 110 by the connector 145. The second lead plate 140 mechanically and stably supports the protective circuit board 121 as a result of the curvature piece 144. The curvature piece 144 has approximately the same curvature as that of the fifth surface 111e so that it is closely attached to the fifth surface 111e. As a result of the curvature of the curvature piece 144, the second lead plate stably supports the protective circuit module 120. In this embodiment, the curvature piece 144 also has a large width, which also helps to support the protective circuit module 120.

As described above, in this embodiment, the curvature pieces 134 and 144 of the first and second lead plates 130 and 140 have the same curvature as that of the fifth surface 111e of the bare cell 110 and have a relatively large width. Therefore, the curvature pieces 134 and 144 have a large area and are attached to the fifth surface 111e of the bare cell 110. Therefore, the protective circuit board 121 is supported by the first and second lead plates 130 and 140 as stable as possible. In other embodiments, the curvature pieces 134 and 144 need not have a larger width that the connectors 135, 145.

Then, the cover 150 is put on around the protective circuit module 120 and the bare cell 110. The first frame 151 of the cover 150 surrounds parts of the protective circuit module 120 and the first and second lead plates 130 and 140. The external terminals 122 of the protective circuit module 120 protrude through the terminal holes 151 a formed in the first frame 151. The remaining parts of the first and second lead plates 130 and 140 are surrounded by the second and third frames 152 and 153. The fourth frame 154 surrounds the sixth surface 111f of the bare cell 110.

Finally, the bare cell 110 and the cover 150 are surrounded by the label 170. The cover 150 is prevented from being separated from the bare cell 110 by the label 170.

The water-sensitive label 190 is then attached to the first frame 151 of the cover 150.

As described above, in the battery pack 100 according to this embodiment of the present invention, the first and second lead plates 130 and 140 have the same curvature as that of one surface of the bare cell 110 to be attached thereto to support the protective circuit module 120 including the protective circuit board 121. At this time, the first and second lead plates 130 and 140 electrically connect the bare cell 110 to the protective circuit module 120 and mechanically support the protective circuit module 120. Therefore, a separate support is not required. Therefore, if an external shock is applied thereto, the protective circuit module 120 is stably supported by the first and second lead plates 130 and 140.

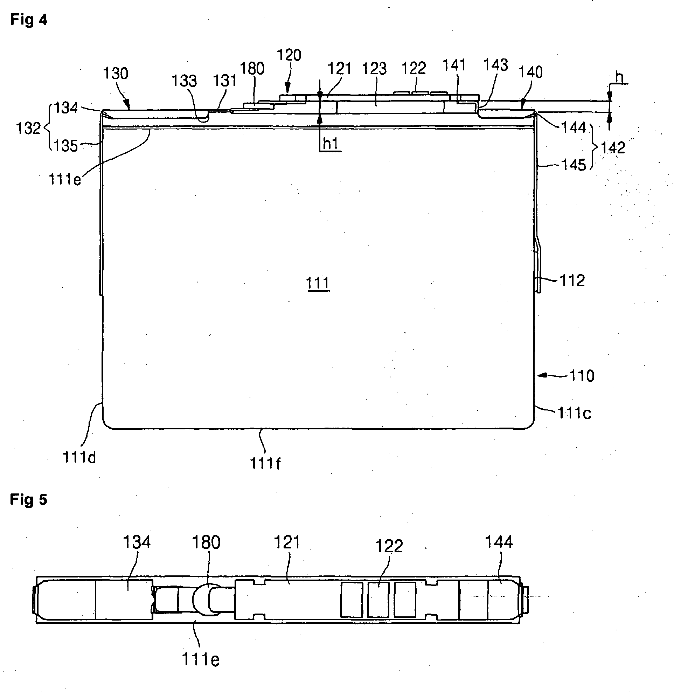

Referring to FIGS. 4 and 5, in the battery pack 100 according to this embodiment of the present invention, first and second lead plates 130 and 140 support the protective circuit module 120. The first and second lead plates 130 and 140 include board connection units 131 and 141, bare cell connection units 132 and 142, and connection units 133 and 143 for connecting the board connection units 131 and 141 to the bare cell connection units 132 and 142.

In this embodiment, the height h of the connection units 133 and 143 is equal to the height h1 of the protective circuit element 123 mounted on the protective circuit board 121. The protective circuit element 123 is mounted in the center of the protective circuit board 121, but it could be mounted differently in other embodiments.

In this embodiment, the protective circuit element 123 is mounted on an opposite surface of the protective circuit module 120 to the surface, on which the external terminals 122 of the protective circuit board 121 are mounted. Therefore, the protective circuit element 123 faces a surface of the bare cell 110 in this embodiment. When the height h of the connection units 133 and 143 is equal to the height h1 of the protective circuit element 123, the protective circuit element 123 may support the protective circuit module 120 including the protective circuit board 121.

In this embodiment, the protective circuit element 123 has a height of about 1.0 mm. When the length h of the connection units 133 and 143 of the first and second lead plates 130 and 140 is equal to the height h1 of the protective circuit element 123, the first and second lead plates 130 and 140 and the protective circuit element 123 may support the protective circuit board 121 together. Therefore, the protective circuit board 121 may be stably supported by one surface of the bare cell 110.

The protective circuit element 123 may be mounted approximately in the center of one surface of the protective circuit board 121. Therefore, the protective circuit board 121 is supported by the protective circuit element 123 to prevent from being bent at the center.

In some embodiments, the curvature units 134 and 144 of the first and second lead plates 130 and 140 may have an area of at least 20% of the area of the fifth surface 111e. In this embodiment of the present invention, the area of the fifth surface 111e is 312,149 mm², the area of the curvature piece 134 of the first lead plate 130 is 40,744 mm² and the area of the curvature piece 144 of the second lead plate 140 is 20,7696 mm². Therefore, the areas of the curvature pieces 134 and 144 of the first and second lead plates 130 and 140 is about 19.7% of the area of the fifth surface 111e in this embodiment.

When the areas of the curvature pieces of the first and second lead plates are significantly smaller than 1/5 of the area of the fifth surface, it is difficult to stably support the protective circuit board. When the areas of the curvature pieces of the first and second lead plates are excessively larger than the area of the fifth surface, the fabrication cost of the lead plates increases and it is harder to assemble the lead plates.

In the above-described embodiments of the present invention, the first and second lead plates are mainly connected to the bare cell by welding, but embodiments of the invention are not limited thereto. That is, the first and second lead plates may be fixed to the bare cell with an adhesive. The first and second lead plates may also be fixed to the bare cell with a tape.

As described above, in the battery pack according to some embodiments of the present invention, the center of the protective circuit board is supported by the protective circuit element so as to prevent the protective circuit board from being bent. The first and second lead plates are attached to one surface of the bare cell to support both ends of the protective circuit board.

In embodiments of the invention, a protective circuit module electrically is connected to a bare cell through first and second lead plates. The protective circuit module is located adjacent a curved surface of the bare cell. A portion of the first lead plate that is located adjacent a first portion of the curved surface of the bare cell is curved, and a portion of the second lead plate that is located adjacent a second portion of the curved surface of the bare cell is curved. The curved portions of the first and second lead plates enable the first and second lead plates to stably support the protective circuit module on the curved surface of the bare cell.

In some embodiments of the invention, the portion of the first lead plate that is located adjacent the first portion of the curved surface of the bare cell is curved with substantially a same curvature as a curvature of the first portion of the curved surface, and the portion of the second lead plate that is located adjacent the second portion of the curved surface of the bare cell is curved with substantially a same curvature as a curvature of the second portion of the curved surface.

The curved portions of the first and second lead plates can conform to the shape of the curved surface of the bare cell. In some embodiments, all the portions of the first and second lead plates can conform to the shape of the adjacent portions of the bare cell.

Therefore, in the battery pack according to embodiments of the present invention, the protective circuit module including the protective circuit board may be stably supported by the first and second lead plates so that fabrication costs spent in mounting a separated support is reduced and that assembling processes are simplified.

While this invention has been described in connection with what is considered to be practical exemplary embodiments, it is to be understood that the invention is not limited to the disclosed embodiments, but, on the contrary, is intended to cover various modifications included within the scope of the appended claims.

## Claims

1. A secondary battery comprising:
a bare cell (110) having an elongate shape and having:
first and second end surfaces located at respective opposite ends of the bare cell (110);
a curved surface connecting the first and second end surfaces;
a first side surface;
a second side surface located opposite the first side surface; and
a third surface located opposite the curved surface;
wherein the first side surface, the second side surface and the third surface also connect the first end surface to the second end surface;
the battery further comprising:
a protective circuit module (120) electrically connected to the bare cell (110) through first and second lead plates (130, 140), wherein the protective circuit module (120) is located adjacent the curved surface of the bare cell (110);
wherein the first lead plate (130) is arranged to connect the protective circuit module (120) to the first end surface of the bare cell (110), and the second lead plate (140) is arranged to connect the protective circuit module (120) to an electrode terminal arranged on the second end surface of the bare cell (110);
**characterised in that** a portion of the first lead plate (130) that is located adjacent a first portion of the curved surface of the bare cell (110) is curved, and a portion of the second lead plate (140) that is located adjacent a second portion of the curved surface of the bare cell (110) is curved.

2. A secondary battery according to Claim 1, wherein the portion df the first lead plate (130) that is located adjacent the first portion of the curved surface of the bare cell (110) is curved with substantially a same curvature as a curvature of the first portion of the curved surface, and the portion of the second lead plate (140) that is located adjacent the second portion of the curved surface of the bare cell (110) is curved with substantially a same curvature as a curvature of the second portion of the curved surface.

3. A secondary battery according to Claim 1 or 2, wherein the first and second lead plates (130, 140) are arranged so that all portions of the first and second lead plates (130, 140) that are adjacent portions of the bare cell (110) have substantially a same shape as the adjacent portions of the bare cell (110).

4. A secondary battery according to any one of the preceding Claims, wherein the first side surface and the second side surface have surface areas that are greater than either the curved surface or the third surface.

5. A secondary battery according to any one of the preceding Claims, wherein the third surface is curved with a curvature corresponding to that of the curved surface.

6. A secondary battery according to any one of the preceding Claims, wherein the first and second end surfaces are substantially flat.

7. A secondary battery according to any one of the preceding Claims,
wherein the first lead plate (130) includes a first coupling portion that is connected to the first end surface of the bare cell (110), and a first curved portion that extends from the first coupling portion along the curved surface of the bare cell (110) to be electrically connected to a first connection terminal of the protective circuit module (120); and
wherein the second lead plate (140) includes a second coupling portion that is connected to the electrode terminal, and a second curved portion that extends from the second coupling portion along the curved surface of the bare cell (110) to be electrically connected to a second connection terminal of the protective circuit module (120).

8. A secondary battery according to Claim 7, wherein:
the first coupling portion is arranged adjacent a portion of the first end surface of the bare cell (110), the first coupling portion having a shape that conforms to that of the adjacent portion of the first end surface; and
the second coupling portion is arranged adjacent a portion of the second end surface of the bare cell (110), the second coupling portion having a shape that conforms to that of the adjacent portion of the second end surface.

9. A secondary battery according to Claim 7 or 8, wherein the first curved portion has a greater width than the first coupling portion, and the second curved portion has a greater width than the second coupling portion.

10. A secondary battery according to any one of the preceding Claims, wherein the protective circuit module (120) includes a protective circuit board (121), and at least one external terminal mounted on an outer surface of the protective circuit board (121);
wherein the protective circuit board (121) includes a protective circuit element mounted on an inner surface of protective circuit module facing the bare cell (110).

11. A secondary battery according to Claim 10 when dependent on any one of Claims 7 to 9;
wherein the first lead plate (130) comprises a first connection portion connecting the first curved portion to the protective circuit board, the first connection portion projecting a first height from the curved surface;
wherein the first height is substantially equal to a height of the protective circuit element mounted on the protective circuit board (121).

12. A secondary battery according to Claim 10 or 11 when dependent on any one of Claims 7 to 9;
wherein the second lead plate (140) comprises a second connection portion connecting the second curved portion to the protective circuit board (121), the second connection portion projecting a second height from the curved surface;
wherein the second height is substantially equal to a maximum height of the protective circuit element mounted on the protective circuit board.

13. A secondary battery according to Claim 3 or any claim dependent on Claim 3, wherein the secondary battery further comprises an insulation member arranged to partially surround the bare cell (110);
wherein the insulation member is arranged such that the first lead plate (130) contacts the first end surface of the bare cell (110) via a first hole in the insulation member, and is electrically insulated from other surfaces of the bare cell;
wherein the insulation member is arranged such that the second lead plate (140) contacts the electrode terminal via a second hole in the insulation member, and is electrically insulated from other surfaces of the bare cell (110) including the second end surface.

## Patentansprüche

1. Sekundärbatterie, die umfasst:
eine nackte Zelle (110), die eine längliche Form aufweist und die aufweist:
eine erste und eine zweite Stirnfläche, die an jeweiligen gegenüberliegenden Enden der nackten Zelle (110) angeordnet sind;
eine gekrümmte Fläche, die die erste und die zweite Stirnfläche verbindet;
eine erste Seitenfläche;
eine zweite Seitenfläche, die der ersten Seitenfläche gegenüberliegend angeordnet ist; und
eine dritte Fläche, die der gekrümmten Fläche gegenüberliegend angeordnet ist;
wobei die erste Seitenfläche, die zweite Seitenfläche und die dritte Seitenfläche auch die erste Stirnfläche mit der zweiten Stirnfläche verbinden,
wobei die Batterie ferner umfasst:
ein Schutzkreismodul (120), das über eine erste und eine zweite Bleiplatte (130, 140) elektrisch mit der nackten Zelle (110) verbunden ist, wobei das Schutzkreismodul (120) der gekrümmten Fläche der nackten Zelle (110) benachbart angeordnet ist;
wobei die erste Bleiplatte (130) so ausgelegt ist, dass sie das Schutzkreismodul (120) mit der ersten Stirnfläche der nackten Zelle (110) verbindet, und wobei die zweite Bleiplatte (140) so ausgelegt ist, dass sie das Schutzkreismodul (120) mit einer Elektrodenklemme verbindet, die auf der zweiten Stirnseite der nackten Zelle (110) angeordnet ist;
**dadurch gekennzeichnet, dass** ein Abschnitt der ersten Bleiplatte (130), der einem ersten Abschnitt der gekrümmten Fläche der nackten Zelle (110) benachbart angeordnet ist, gekrümmt ist, und dass ein Abschnitt der zweiten Bleiplatte (140), der einem zweiten Abschnitt der gekrümmten Fläche der nackten Zelle (110) benachbart angeordnet ist, gekrümmt ist.

2. Sekundärbatterie nach Anspruch 1, wobei der Abschnitt der ersten Bleiplatte (130), der dem ersten Abschnitt der gekrümmten Fläche der nackten Zelle (110) benachbart angeordnet ist, mit einer im Wesentlichen gleichen Krümmung wie eine Krümmung des ersten Abschnitts der gekrümmten Fläche gekrümmt ist, und wobei der Abschnitt der zweiten Bleiplatte (140), der dem zweiten Abschnitt der gekrümmten Fläche der nackten Zelle (110) benachbart angeordnet ist, mit einer im Wesentlichen gleichen Krümmung wie eine Krümmung des zweiten Abschnitts der gekrümmten Fläche gekrümmt ist.

3. Sekundärbatterie nach Anspruch 1 oder 2, wobei die erste und die zweite Bleiplatte (130, 140) so ausgelegt sind, dass alle Abschnitte der ersten und der zweiten Bleiplatte (130, 140), die benachbarte Abschnitte der nackten Zelle (110) sind, eine im Wesentlichen gleiche Form wie die benachbarten Abschnitte der nackten Zelle (110) aufweisen.

4. Sekundärbatterie nach einem der vorstehenden Ansprüche, wobei die erste Seitenfläche und die zweite Seitenfläche Oberflächenbereiche aufweisen, die größer als die gekrümmte Fläche oder die dritte Fläche sind.

5. Sekundärbatterie nach einem der vorstehenden Ansprüche, wobei die dritte Fläche mit einer Krümmung gekrümmt ist, die jener der gekrümmten Fläche entspricht.

6. Sekundärbatterie nach einem der vorstehenden Ansprüche, wobei die erste und die zweite Stirnfläche im Wesentlichen flach sind.

7. Sekundärbatterie nach einem der vorstehenden Ansprüche,
wobei die erste Bleiplatte (130) einen ersten Verbindungsabschnitt enthält, der mit der ersten Stirnfläche der nackten Zelle (110) verbunden ist, und einen ersten gekrümmten Abschnitt enthält, der sich vom ersten Verbindungsabschnitt entlang der gekrümmten Fläche der nackten Zelle (110) erstreckt, um elektrisch mit einer ersten Anschlussklemme des Schutzkreismoduls (120) verbunden zu sein; und
wobei die zweite Bleiplatte (140) einen zweiten Verbindungsabschnitt enthält, der mit der Elektrodenklemme verbunden ist, und einen zweiten gekrümmten Abschnitt enthält, der sich vom zweiten Verbindungsabschnitt entlang der gekrümmten Fläche der nackten Zelle (110) erstreckt, um elektrisch mit einer zweiten Anschlussklemme des Schutzkreismoduls (120) verbunden zu sein.

8. Sekundärbatterie nach Anspruch 7, wobei:
der erste Verbindungsabschnitt einem Abschnitt der ersten Stirnfläche der nackten Zelle (110) benachbart angeordnet ist, wobei der erste Verbindungsabschnitt eine Form aufweist, die jener des benachbarten Abschnitts der ersten Stirnfläche entspricht; und
der zweite Verbindungsabschnitt einem Abschnitt der zweiten Stirnfläche der nackten Zelle (110) benachbart angeordnet ist, wobei der zweite Verbindungsabschnitt eine Form aufweist, die jener des benachbarten Abschnitts der zweiten Stirnfläche entspricht.

9. Sekundärbatterie nach Anspruch 7 oder 8, wobei der erste gekrümmte Abschnitt eine größere Breite als der erste Verbindungsabschnitt aufweist, und wobei der zweite gekrümmte Abschnitt eine größere Breite als der zweite Verbindungsabschnitt aufweist.

10. Sekundärbatterie nach einem der vorstehenden Ansprüche, wobei das Schutzkreismodul (120) eine Schutzkreisplatine (121) und zumindest eine externe Klemme enthält, die an einer Außenfläche der Schutzkreisplatine (121) angebracht ist;
wobei die Schutzkreisplatine (121) ein Schutzkreiselement enthält, das auf einer Innenfläche des Schutzkreismoduls angebracht ist, das der nackten Zelle (110) zugewandt ist.

11. Sekundärbatterie nach Anspruch 10, wenn von einem der Ansprüche 7 bis 9 abhängig;
wobei die erste Bleiplatte (130) einen ersten Verbindungsabschnitt umfasst, der den ersten gekrümmten Abschnitt mit der Schutzkreisplatine verbindet, wobei der erste Verbindungsabschnitt um eine erste Höhe von der gekrümmten Fläche hervorsteht;
wobei die erste Höhe im Wesentlichen einer Höhe des Schutzkreiselements entspricht, das auf der Schutzkreisplatine (121) angebracht ist.

12. Sekundärbatterie nach Anspruch 10 oder 11, wenn von einem der Ansprüche 7 bis 9 abhängig;
wobei die zweite Bleiplatte (140) einen zweiten Verbindungsabschnitt umfasst, der den zweiten gekrümmten Abschnitt mit der Schutzkreisplatine (121) verbindet, wobei der zweite Verbindungsabschnitt um eine zweite Höhe von der gekrümmten Fläche hervorsteht;
wobei die zweite Höhe im Wesentlichen einer maximalen Höhe des Schutzkreiselements entspricht, das auf der Schutzkreisplatine angebracht ist.

13. Sekundärbatterie nach Anspruch 3 oder einem Anspruch, der von Anspruch 3 abhängig ist, wobei die Sekundärbatterie ferner ein Isolierelement umfasst, das so ausgelegt ist, dass es die nackte Zelle (110) teilweise umgibt;
wobei das Isolierelement so ausgelegt ist, dass die erste Bleiplatte (130) die erste Stirnfläche der nackten Zelle (110) über ein erstes Loch im Isolierelement berührt und dass es in Bezug auf andere Flächen der nackten Zelle elektrisch isoliert ist;
wobei das Isolierelement so ausgelegt ist, dass die zweite Bleiplatte (140) die Elektrodenklemme über ein zweites Loch im Isolierelement berührt und dass es in Bezug auf andere Flächen der nackten Zelle (110), einschließlich der zweiten Stirnfläche, elektrisch isoliert ist.

## Revendications

1. Batterie secondaire, comprenant :
une cellule nue (110) présentant une forme allongée et présentant :
des première et deuxième surfaces terminales situées au niveau d'extrémités opposées respectives de la cellule nue (110) ;
une surface courbe raccordant les première et deuxième surfaces terminales ;
une première surface latérale ;
une deuxième surface latérale située à l'opposé de la première surface latérale ; et
une troisième surface située à l'opposé de la surface courbe ;
dans laquelle la première surface latérale, la deuxième surface latérale et la troisième surface raccordent également la première surface terminale à la deuxième surface terminale ;
la batterie comprenant en outre :
un module de circuit de protection (120) raccordé électriquement à la cellule nue (110) par l'intermédiaire de première et deuxième plaques de plomb (130, 140), le module de circuit de protection (120) étant situé adjacent à la surface courbe de la cellule nue (110) ;
dans laquelle la première plaque de plomb (130) est agencée de manière à raccorder le module de circuit de protection (120) à la première surface terminale de la cellule nue (110), et la deuxième plaque de plomb (140) est agencée de manière à raccorder le module de circuit de protection (120) à une borne d'électrode agencée sur la deuxième surface terminale de la cellule nue (110) ;
**caractérisée en ce qu'**une partie de la première plaque de plomb (130) qui est située adjacente à une première partie de la surface courbe de la cellule nue (110) est courbe, et une partie de la deuxième plaque de plomb (140) qui est située adjacente à une deuxième partie de la surface courbe de la cellule nue (110) est courbe.

2. Batterie secondaire selon la revendication 1, dans laquelle la partie de la première plaque de plomb (130) qui est située adjacente à la première partie de la surface courbe de la cellule nue (110) est courbe avec essentiellement une même courbure qu'une courbure de la première partie de la surface courbe, et la partie de la deuxième plaque de plomb (140) qui est située adjacente à la deuxième partie de la surface courbe de la cellule nue (110) est courbe avec essentiellement une même courbure qu'une courbure de la deuxième partie de la surface courbe.

3. Batterie secondaire selon la revendication 1 ou 2, dans laquelle les première et deuxième plaques de plomb (130, 140) sont agencées de telle manière que toutes les parties des première et deuxième plaques de plomb (130, 140) qui sont des parties adjacentes de la cellule nue (110) présentent essentiellement une même forme que les parties adjacentes de la cellule nue (110).

4. Batterie secondaire selon l'une quelconque des revendications précédentes, dans laquelle la première surface latérale et la deuxième surface latérale présentent des surfaces spécifiques qui sont supérieures à la surface courbe ou à la troisième surface.

5. Batterie secondaire selon l'une quelconque des revendications précédentes, dans laquelle la troisième surface est courbe avec une courbure correspondant à celle de la surface courbe.

6. Batterie secondaire selon l'une quelconque des revendications précédentes, dans laquelle les première et deuxième surfaces terminales sont essentiellement plates.

7. Batterie secondaire selon l'une quelconque des revendications précédentes,
dans laquelle la première plaque de plomb (130) comprend une première partie couplage qui est raccordée à la première surface terminale de la cellule nue (110), et une première partie courbe qui s'étend à partir de la première partie couplage le long de la surface courbe de la cellule nue (110) afin d'être raccordée électriquement à une première borne de raccordement du module de circuit de protection (120) ; et
dans laquelle la deuxième plaque de plomb (140) comprend une deuxième partie couplage qui est raccordée à la borne d'électrode, et une deuxième partie courbe qui s'étend à partir de la deuxième partie couplage le long de la surface courbe de la cellule nue (110) afin d'être raccordée électriquement à une deuxième borne de raccordement du module de circuit de protection (120).

8. Batterie secondaire selon la revendication 7, dans laquelle :
la première partie couplage est agencée adjacente à une partie de la première surface terminale de la cellule nue (110), la première partie couplage présentant une forme qui correspond à celle de la partie adjacente de la première surface terminale ; et
la deuxième partie couplage est agencée adjacente à une partie de la deuxième surface terminale de la cellule nue (110), la deuxième partie couplage présentant une forme qui correspond à celle de la partie adjacente de la deuxième surface terminale.

9. Batterie secondaire selon la revendication 7 ou 8, dans laquelle la première partie courbe présente une largeur supérieure à celle de la première partie couplage, et la deuxième partie courbe présente une largeur supérieure à celle de la deuxième partie couplage.

10. Batterie secondaire selon l'une quelconque des revendications précédentes, dans laquelle le module du circuit de protection (120) comprend une carte de circuit de protection (121), et au moins une borne externe montée sur une surface extérieure de la carte de circuit de protection (121) ;
dans laquelle la carte du circuit de protection (121) comprend un élément de circuit de protection monté sur une surface intérieure de module de circuit de protection faisant face à la cellule nue (110).

11. Batterie secondaire selon la revendication 10 lorsqu'elle dépend de l'une quelconque des revendications 7 à 9 ;
dans laquelle la première plaque de plomb (130) comprend une première partie raccordement raccordant la première partie courbe à la carte de circuit de protection, la première partie raccordement faisant saillie sur une première hauteur à partir de la surface courbe ;
dans laquelle la première hauteur est essentiellement égale à une hauteur de l'élément de circuit de protection monté sur la carte de circuit de protection (121).

12. Batterie secondaire selon la revendication 10 ou 11 lorsqu'elle dépend de l'une quelconque des revendications 7 à 9 ;
dans laquelle la deuxième plaque de plomb (140) comprend une deuxième partie raccordement raccordant la deuxième partie courbe à la carte de circuit de protection (121), la deuxième partie raccordement faisant saillie sur une deuxième hauteur à partir de la surface courbe ;
dans laquelle la deuxième hauteur est essentiellement égale à une hauteur maximale de l'élément de circuit de protection monté sur la carte de circuit de protection.

13. Batterie secondaire selon la revendication 3 ou l'une quelconque des revendications dépendantes de la revendication 3, dans laquelle la batterie secondaire comprend en outre un élément isolant agencé pour entourer partiellement la cellule nue (110) ;
dans laquelle l'élément isolant est agencé de telle manière que la première plaque de plomb (130) vient en contact avec la première surface terminale de la cellule nue (110) via un premier trou dans l'élément isolant, et est électriquement isolé des autres surfaces de la cellule nue ;
dans laquelle l'élément isolant est agencé de telle manière que la deuxième plaque de plomb (140) vient en contact avec la borne d'électrode via un deuxième trou dans l'élément isolant, et est électriquement isolé des autres surfaces de la cellule nue (110) y compris la deuxième surface terminale.
